# EUROPÄISCHE PATENTANMELDUNG

(11) **EP 0 734 924 A2**
(43) Veröffentlichungstag der Anmeldung: **02.10.1996**
(21) Anmeldenummer: 96101029.5
(22) Anmeldetag: 25.01.1996
(51) Int. Cl.: B60R 25/04, B60R 25/00

(54) **Diebstahlsicherungsvorrichtung für Kraftfahrzeuge**

(30) Priorität: 30.03.1995 DE 19511701
(71) Anmelder: Bayerische Motoren Werke Aktiengesellschaft, 80788 München (DE)
(72) Erfinder: Hohenner, Hans, D-80331 München (DE)

(57) **Zusammenfassung**

Bei einer Diebstahlsicherungsvorrichtung für Kraftfahrzeuge, bei dem die Aufeinanderfolge von Betätigungen elektrischer Schalter auswertbar und bei Übereinstimmen mit einer vorgegebenen Aufeinanderfolge ein Freigabesignal erzeugbar ist, ist die Aufeinanderfolge individuell programmierbar.

## Beschreibung

Die Erfindung bezieht sich auf eine Diebstahlsicherungsvorrichtung mit den Merkmalen, die im Oberbegriff des Patentanspruchs 1 angegeben sind.

Eine derartige Vorrichtung ist aus der DE 43 14 064 C2 bekannt. Die vorgegebene Aufeinanderfolge entspricht der logischen und zeitlichen Reihenfolge der Betätigungsschritte beim Startvorgang des Kraftfahrzeugs. Es wird festgestellt, ob beispielsweise zunächst die Zentralverriegelung über einen Schalter im Türschloß entriegelt wird, anschließend der Türkontakt der Fahrertüre bei deren Öffnen betätigt wird und anschließend der Anlaßschalter im Zündschloß geschlossen wird. Es handelt sich dabei um die natürliche und von jedem rechtmäßigen Fahrzeugbenutzer durchgeführte Aufeinanderfolge. Nachteilig bei dieser Vorrichtung ist, daß damit kein Schutz vor einer Inbetriebnahme des Kraftfahrzeugs durch den unrechtmäßigen Besitzer des Fahrzeugschlüssels erreicht wird. Auch besteht kein Schutz im Falle eines Carnappings, bei dem das Kraftfahrzeug geraubt wird.

Der Erfindung liegt die Aufgabe zugrunde, eine Vorrichtung der eingangs genannten Art zu schaffen, mit der eine Sicherheit vor unberechtigter Benutzung auch dann erreicht wird, wenn der Fahrzeugbenutzer unrechtmäßig in den Besitz des Fahrzeugschlüssels gelangt ist.

Die Erfindung löst diese Aufgabe durch die kennzeichnenden Merkmale des Patentanspruchs 1.

Bei der Erfindung entspricht die Aufeinanderfolge der Schalterbetätigungen nicht mehr der für die Inbetriebnahme des Kraftfahrzeugs notwendigen Reihenfolge. Vielmehr ist es möglich, auch Schalter in die Reihenfolge mit einzubeziehen, die zur eigentlichen Inbetriebnahme des Kraftfahrzeugs nicht notwendigerweise erforderlich sind oder aber deren Betätigung in einem anderen zeitlichen und logischen Zusammenhang mit den anderen Schaltern steht. Es kann beispielsweise vorgesehen sein, in die Reihenfolge eine Betätigung des Schalters für die elektrische Verstellung eines Außenspiegels oder ein mehrmaliges Betätigen des Fahrpedals bei geschlossenem Zündstromkreis mit einzubeziehen. Ausgehend von der "natürlichen" Reihenfolge der Schalterbetätigungen, wie sie in der DE 43 14 064 C2 angegeben ist, erfolgt das Betätigen des Spiegel-Verstellschalters z.B. nach dem Schließen der Fahrertür und vor dem Schließen des Zünd-Anlaßschalters. Ein unberechtigter Fahrzeugbenutzer, auch wenn er im Besitz des Schlüssels ist, weiß nichts von dieser zusätzlichen, an sich unnötigen Schalterbetätigung.

Selbstverständlich ist es auch möglich, anstelle der Betätigung zusätzlicher Schalter, die mit der eigentlichen Inbetriebnahme des Kraftfahrzeugs an sich nichts zu tun haben, auch eine mehrfache Betätigung der Schalter vorzusehen, die für die Inbetriebnahme des Kraftfahrzeugs notwendig sind. So ist es beispielsweise möglich, den Türkontaktschalter mehrmals durch entsprechendes Öffnen der Fahrertür vor dem Betätigen des Anlaßschalters zu aktivieren. Auch derartige, über das unumgängliche Maß von Schalterbetätigungen hinausgehende Betätigen von Schaltern als Teil der vorgegebenen Reihenfolge ist Gegenstand der Erfindung.

Eine Möglichkeit, die Erfindung zu verbessern, besteht darin, die Aufeinanderfolge selbsttätig zu ändern. Damit ist sowohl eine Änderung der in die Aufeinanderfolge einzubeziehenden Schalter selbst als auch eine Änderung der Reihenfolge desselben Schalterumfangs zu verstehen. Auch kann die Änderung bei jeder erneuten Inbetriebnahme des Kraftfahrzeugs oder aber Erfüllen sonstiger Bedingungen vorgenommen werden. Es kann beispielsweise nach jeweils zehn gleichartigen Inbetriebnahmen für die folgenden zehn Inbetriebnahmen die Schalterreihenfolge oder/und die Schalterauswahl geändert sein. Selbstverständlich ist es möglich, die Änderung der "gültigen" Aufeinanderfolge rechtzeitig, vor der nächsten Inbetriebnahme anzuzeigen. Die Erfindung ist insoweit mit der Änderung eines Paßworts zu vergleichen, wie sie durch den Benutzer eines Rechners in vorgegebenen zeitlichen Abständen durchzuführen ist.

Wird die Auswahl der Schalter geändert, so kann dies auf verschiedene Weise erfolgen. Im angegebenen Beispiel einer Schalterbetätigung für die Verstellung eines Außenspiegels kann zwischen der Betätigung des linken und des rechten Außenspiegels abgewechselt werden. Wird der Scheibenwischerschalter in die Aufeinanderfolge einbezogen, kann eine Unterscheidung darin bestehen, verschiedene Betriebsarten des Scheibenwischers auszuwählen.

Eine weitere wesentliche Verbesserung der Erfindung besteht darin, den Programmiervorgang und/oder die Durchführung der Aufeinanderfolge der Schalterbetätigungen nach außen nicht sichtbar werden zu lassen. Wird beispielsweise der Scheibenwischerschalter in die Aufeinanderfolge miteinbezogen, so soll bei dessen Betätigen kein Scheibenwischvorgang ausgelöst werden. Erst wenn der Startvorgang vollzogen ist, wirken die Schalter wie üblich und ermöglichen es, Ausrüstungsbauteile, wie Scheibenwischer, Rückblickspiegel, Klimaanlage, Radio, Fernsprecher, Fahr- und Bremspedalstellung usw. zu erfassen und in entsprechende Steuer- und Betätigungssignale umzusetzen. Voraussetzung für die Durchführung der Erfindung ist es dabei, auch das Betätigen der nicht in die Reihenfolge einbezogenen Schalter vor dem Anlassen zu erfassen, um eine Fehlbedienung sicher zu erkennen und das Freigabesignal dann nicht auszulösen.

Vielmehr kann besonders dann, wenn mehrfach versucht wird, die richtige Reihenfolge zu erraten, selbsttätig eine Türverriegelungsvorrichtung aktiviert werden. Der unrechtmäßige Fahrzeugbenutzer ist dann im Kraftfahrzeug gefangen. Zusätzliche optische und/oder akustische Signale können in diesem Fall das Festhalten eines unrechtmäßigen Fahrzeugbenutzers unterstützen.

Damit wird ein wirksamer Schutz vor einem Diebstahl oder Raub des Kraftfahrzeugs erreicht. Eine unbefugte Inbetriebnahme des Kraftfahrzeugs ist auch bei Besitz des Fahrzeugschlüssels nicht möglich. Ein Raub des Kraftfahrzeugs läßt sich zwar nicht verhindern. Die erneute Inbetriebnahme des Kraftfahrzeugs wird dann jedoch unmöglich gemacht und damit eine weitere Benutzung des Kraftfahrzeugs verhindert. Zur Verhinderung eines Raubes ist es auch vorstellbar, nach jedem öffnen der Fahrertür bei laufendem Motor das Betätigen der Schalter in der vorgegebenen Reihenfolge zu verlangen, anderenfalls die weitere Benutzung des Kraftfahrzeugs verhindert wird, indem Antriebsaggregate selbsttätig abgeschaltet werden.

## Patentansprüche

1. Diebstahlsicherungsvorrichtung für Kraftfahrzeuge, bei dem die Aufeinanderfolge von Betätigungen elektrischer Schalter auswertbar und bei Übereinstimmen mit einer vorgegebenen Aufeinanderfolge ein Freigabesignal erzeugbar ist, dadurch gekennzeichnet, daß die Aufeinanderfolge individuell programmierbar ist.

2. Vorrichtung nach Anspruch 1, dadurch gekennzeichnet, daß auch Schalter in die Aufeinanderfolge einbezogen sind, die zur Inbetriebnahme des Kraftfahrzeugs nicht notwendigerweise betätigt sind.

3. Vorrichtung nach Anspruch 1 oder 2, dadurch gekennzeichnet, daß die Aufeinanderfolge selbsttätig änderbar ist.

4. Vorrichtung nach einem der Ansprüche 1 bis 3, dadurch gekennzeichnet, daß der Programmiervorgang und/oder die Ausführung der Aufeinanderfolge nach außen nicht erkennbar ist.

5. Vorrichtung nach einem der Ansprüche 1 bis 4, dadurch gekennzeichnet, daß bei mehrmaligem vergeblichen Versuch, die Aufeinanderfolge durchzuführen, eine Türverriegelungsvorrichtung selbsttätig aktivierbar ist.
